# EUROPEAN PATENT SPECIFICATION

(11) **EP 3 198 753 B1**
(45) Date of publication and mention of the grant of the patent: **06.03.2024**
(21) Application number: 15767562.0
(22) Date of filing: 25.09.2015
(51) Int. Cl.: H04B 10/114, G01V 1/38, H04B 10/80, H04W 56/00, G01V 1/22, H04B 13/02

(54) **WIRELESS DATA TRANSFER FOR AUTONOMOUS SEISMIC NODES**
DRAHTLOSE DATENÜBERTRAGUNG FÜR AUTONOME SEISMISCHE KNOTEN
TRANSFERT DE DONNÉES SANS FIL POUR NOEUDES SISMIQUES AUTONOMES

(30) Priority: 25.09.2014 US 201462055512 P
(43) Date of publication of application: 02.08.2017
(73) Proprietor: PXGEO UK Limited, Bristol BS1 6FL (GB)
(72) Inventor: ISFELDT, Bjarne, N-5174 Mathopen (NO); ROKKAN, Arne Henning, N-5184 Olsvik (NO); TODD, Michael, Dublin 6W (IE); FARNAN, Martin, Dublin D14KH35 (IE)
(74) Representative: Barker Brettell LLP
(86) International application number: PCT/EP2015/072181
(87) International publication number: WO 2016/046406

(56) References cited:
- WO-A1-2011/139159
- WO-A1-2014/027892
- WO-A1-2014/080651
- US-A1- 2008 144 442
- US-A1- 2010 107 959
- US-A1- 2011 310 704
- US-A1- 2012 105 246

## Description

### BACKGROUND OF THE INVENTION

### PRIORITY

This application claims priority to U.S. provisional patent application no. 62/055,512, filed on September 25, 2014.

### FIELD OF THE INVENTION

This invention relates to marine seismic systems and more particularly relates to wireless data transfer for an autonomous marine seismic node.

### DESCRIPTION OF THE RELATED ART

Marine seismic data acquisition and processing generates a profile (image) of a geophysical structure under the seafloor. Reflection seismology is a method of geophysical exploration to determine the properties of the Earth's subsurface, which is especially helpful in determining an accurate location of oil and gas reservoirs or any targeted features. Marine reflection seismology is based on using a controlled source of energy (typically acoustic energy) that sends the energy through water and subsurface geologic formations. The transmitted acoustic energy propagates downwardly through the subsurface as acoustic waves, also referred to as seismic waves or signals. By measuring the time it takes for the reflections or refractions to come back to seismic receivers (also known as seismic data recorders or nodes), it is possible to evaluate the depth of features causing such reflections. These features may be associated with subterranean hydrocarbon deposits or other geological structures of interest.

There are many methods to record the reflections from a seismic wave off the geological structures present in the surface beneath the seafloor, such as by seismic streamers, ocean bottom cables (OBC), and ocean bottom nodes (OBN). Regarding OBN systems, and as compared to seismic streamers and OBC systems, OBN systems have nodes that are discrete, autonomous units (no direct connection to other nodes or to the marine vessel) where data is stored and recorded during a seismic survey. One such OBN system is offered by the Applicant under the name Trilobit^{®}. For OBN systems, seismic data recorders are placed directly on the ocean bottom by a variety of mechanisms, including by the use of one or more of Autonomous Underwater Vehicles (AUVs), Remotely Operated Vehicles (ROVs), by dropping or diving from a surface or subsurface vessel, or by attaching autonomous nodes to a cable that is deployed behind a marine vessel.

Autonomous ocean bottom nodes are independent seismometers, and in a typical application they are self-contained units comprising a housing, frame, skeleton, or shell that includes various internal components such as geophone and hydrophone sensors, a data recording unit, a reference clock for time synchronization, and a power source. The power sources are typically battery-powered, and in some instances the batteries are rechargeable. In operation, the nodes remain on the seafloor for an extended period of time. Once the data recorders are retrieved, the data is downloaded and batteries may be replaced or recharged in preparation of the next deployment. Various designs of ocean bottom autonomous nodes are well known in the art. Prior autonomous nodes include spherical shaped nodes, cylindrical shaped nodes, and disk shaped nodes. Other prior art systems include a deployment rope/cable with integral node casings or housings for receiving autonomous seismic nodes or data recorders. Some of these devices and related methods are described in more detail in the following patents : United States Patent Nos. 6,024,344; 7,310,287; 7,675,821; 7,646,670; 7,883,292; 8,427,900; and 8,675,446.

Each autonomous node generally has a physical electronics interface connector that, once the node is retrieved to a marine vessel, a separate physical plug or interface connector must be manually inserted, connected, or plugged into the node to transmit data. This requires a complex cable infrastructure and uses a large amount of cables and connectors for data and synchronization. This process has numerous problems, including potentially slow data transfer rate, the need for each node to have an external physical connection (which are prone to corrosion and sealing issues), and the need to physically connect each node to a physical connection for data transfer, each of which leads to overall inefficiency, reliability problems, and operating errors. Further, the use of manpower to change connectors is very extensive and requires space between nodes to access connectors. Further, to allow operator access to the nodes for charging and data download, conventional storage containers/modules are inefficient with wasted space between the nodes. A marine vessel with thousands of nodes stored and utilized would require a large number of storage containers/modules based on conventional data download techniques.
US2011/310704 discloses a marine seismic exploration method and system comprised of continuous recording, self-contained ocean bottom pods characterized by low profile casings, An external bumper is provided to promote ocean bottom coupling and prevent fishing net entrapment. Pods are tethered together with flexible, non-rigid, non-conducting cable used to control pod deployment. Pods are deployed and retrieved from a boat deck configured to have a storage system and a handling system to attach pods to cable on-the-fly. The storage system is a juke box configuration of slots wherein individual pods are randomly stored in the slots to permit data extraction, charging, testing and synchronizing without opening the pods. A pod may include an inertial navigation system to determine ocean floor location and a rubidium clock for timing. The system includes mathematical gimballing. The cable may include shear couplings designed to automatically shear apart if a certain level of cable tension is reached.

A need exists for an improved method and system for seismic node data transfer, and in particular one that allows for the rapid transfer of data of such nodes in a highly automated fashion that can be utilized on a variety of marine vessels and is cost-effective by using o ff the shelf electronic components.

### SUMMARY OF THE INVENTION

Apparatuses, systems, and methods for wireless data transfer on ocean bottom marine seismic nodes are described. In an embodiment, an autonomous seismic node configured for wireless data transfer includes one or more power sources, one or more seismic sensors, one or more recording devices, and a wireless system, wherein the wireless system comprises a node electronics interface in data communication with one or more of the power sources, seismic sensors, and recording devices, and a wireless data communication interface for communication with an external wireless system and/or data handling system.

In an embodiment, the node is configured for deployment on or near a seabed. The node may be configured for optical wireless transfer. In such an embodiment, the node may include an optical window. The node may also include a Small Form-factor Pluggable (SFP) optical transceiver device. In one embodiment, the node includes a Large Core Fiber (LCF) coupled to the SFP, the LCF configured to focus optical energy communicated to and from the SFP. The node may include an optical collimator coupled to the LCF. In an alternative embodiment, the node is configured for electromagnetic wireless transfer.

In an embodiment, the node is configured to interface with a vessel-based wireless station for the transmission of data to and from the node. In such an embodiment, the node may not include an external connector for data transmission. The node may also include a signal synchronization unit configured to synchronize clock signals of the node with clock signals of an external device.

In an embodiment, a system of transferring data wirelessly from an autonomous seismic node includes at least one node based wireless system on an autonomous seismic node, and at least one vessel based wireless system. In an embodiment, the node based wireless system includes one or more power sources, one or more seismic sensors, one or more recording devices, and a wireless system, wherein the wireless system comprises a node electronics interface in data communication with one or more of the power sources, seismic sensors, and recording devices, and a first wireless data communication interface for communication with an external data handling system. In an embodiment the at least one vessel based wireless system includes a system data interface in data communication with one or more ship-based communication devices, and a second wireless data communication interface for communication with the at least one node based wireless system on the autonomous seismic node.

In an embodiment, the system includes a plurality of node based wireless systems. The plurality of node based wireless systems interfaces with the vessel based wireless system. The system includes a plurality of vessel based wireless systems that are configured to interface with the plurality of node based wireless systems. In an embodiment, the at least one vessel-based wireless system is located on a storage system of a marine vessel. In another embodiment, the at least one vessel-based wireless system is located adjacent to a conveyor on a marine vessel.

In an embodiment, the system is configured to wirelessly transfer data over an optical link. In an alternative embodiment, the system is configured to wirelessly transfer data over an electromagnetic link. In various embodiments, the system may be configured according to a clock signal synchronization protocol. In such an embodiment, the vessel based wireless system may include a signal synchronization unit configured to synchronize clock signals of the node with clock signals of the at least one node based wireless system. The at least one node based wireless system may also include a signal synchronization unit configured to synchronize clock signals of the node with clock signals of the vessel based wireless system.

In an embodiment, not forming part of the present invention, a method of transferring data wirelessly includes providing at least one autonomous seismic node with a wireless system. The method may also include providing at least one vessel-based wireless system configured to communicate with the at least one node-based wireless system. Additionally, the method may include positioning the at least one node-based wireless system adjacent to the at least one vessel-based wireless system for wireless communications, which may take place on board a marine vessel. Also, the method may include wirelessly transferring data from the at least one node-based wireless system to the at least one vessel-based system. In one embodiment, wirelessly transferring data is performed over an optical link. Alternatively, wirelessly transferring data is performed over an electromagnetic link. Additionally, the method may include synchronizing a clock signal of the at least one node based wireless system with a clock signal of the at least one vessel-based wireless system.

### BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.
FIG. 1A illustrates an embodiment of a layout of a seabed seismic recorder system that may be used with the described wireless data transfer for an ocean bottom seismic node.
FIG. 1B illustrates an embodiment of a layout of a seabed seismic recorder system that may be used with the described wireless data transfer for an ocean bottom seismic node.
FIG. 2A illustrates one embodiment of an autonomous seismic node with an external data connector.
FIG. 2B illustrates another embodiment of an autonomous seismic node with an external data connector.
FIG. 3A illustrates one embodiment of a seismic node configured for wireless data transfer.
FIG. 3B illustrates another embodiment of a seismic node configured for wireless data transfer.
FIG. 3C illustrates another embodiment of a seismic node configured for wireless data transfer.
FIG. 4 illustrates one embodiment of a system for wireless data transfer on an autonomous seismic node.
FIG. 5 illustrates another embodiment of a system for wireless data transfer on an autonomous seismic node.
FIG. 6 illustrates another embodiment of a system for wireless data transfer on an autonomous seismic node.
FIG. 7 illustrates one embodiment of a system for optical data transfer.
FIG. 8 illustrates another embodiment of a system for optical data transfer.
FIG. 9 illustrates an embodiment of a system for optical data transfer with optical amplification.
FIG. 10 illustrates one embodiment of a Lambertian optical signaling device.
FIG. 11 illustrates one embodiment of a Lambertian optical transceiver.
FIG. 12 illustrates one embodiment of a Lambertian system for optical data transfer.
FIG. 13 illustrates one embodiment of a wireless data transfer system with synchronization.
FIG. 14 illustrates another embodiment of a wireless data transfer system with synchronization.
FIG. 15 illustrates an embodiment of a wireless data transfer system with synchronization.
FIG. 16 illustrates one embodiment of a system for simultaneous data transfer with a plurality of seismic nodes.
FIG. 17 illustrates one embodiment of a system for queued data transfer with a plurality of seismic nodes , not forming part of the present invention.
FIG. 18 illustrates one embodiment of a system for hybrid data transfer with a plurality of seismic nodes.
FIG. 19 illustrates another embodiment of a system for wireless data transfer with a plurality of seismic nodes.
FIG. 20 illustrates one embodiment of a method for wireless data transfer with a seismic node, not forming part of the present invention.

### DETAILED DESCRIPTION

Various features and advantageous details are explained more fully with reference to the non-limiting embodiments that are illustrated in the accompanying drawings and detailed in the following description. Descriptions of well-known starting materials, processing techniques, components, and equipment are omitted so as not to unnecessarily obscure the invention in detail. It should be understood, however, that the detailed description and the specific examples, while indicating embodiments of the invention, are given by way of illustration only, and not by way of limitation.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

### NODE DEPLOYMENT

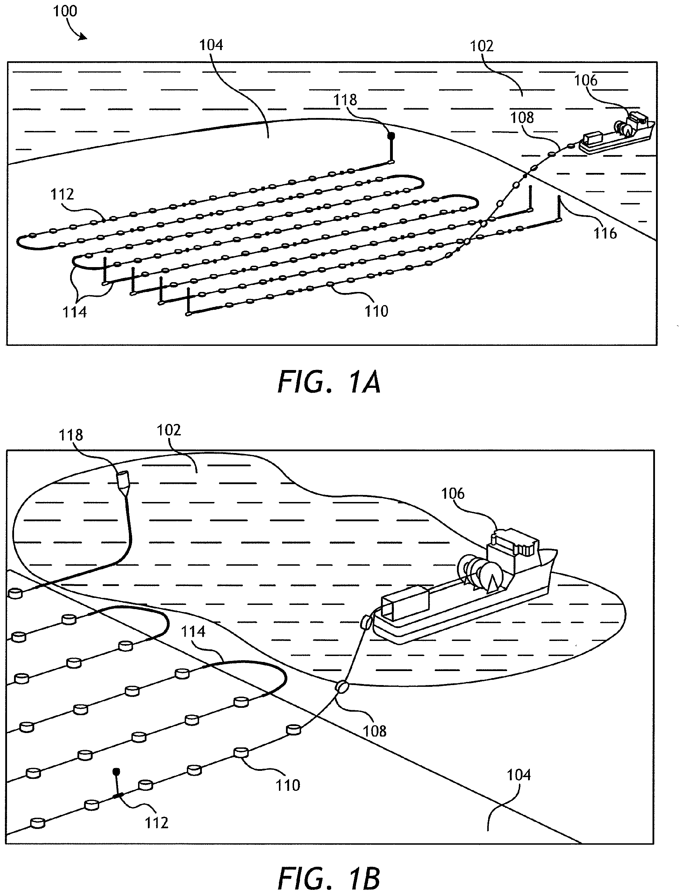

FIGs. 1A and 1B illustrate a layout of a seabed seismic recorder system that may be used with autonomous seismic nodes for marine deployment. FIG. 1A is a diagram illustrating one embodiment of a marine deployment system 100 for marine deployment of seismic nodes 110. One or more marine vessels deploy and recover a cable (or rope) with attached sensor nodes according to a particular survey pattern. In an embodiment, the system includes a marine vessel 106 designed to float on a surface 102 of a body of water, which may be a river, lake, ocean, or any other body of water. The marine vessel 106 may deploy the seismic nodes 110 in the body of water or on the floor 104 of the body of water, such as a seabed. In an embodiment, the marine vessel 106 may include one or more deployment lines 108. One or more seismic nodes 110 may be attached directly to the deployment line 108. Additionally, the marine deployment system 100 may include one or more acoustic positioning transponders 112, one or more weights 114, one or more pop up buoys 116, and one or more surface buoys 118. As is standard in the art, weights 114 can be used at various positions of the cable to facilitate the lowering and positioning of the cable, and surface buoys 118 or pop up buoys 116 may be used on the cable to locate, retrieve, and/or raise various portions of the cable. Acoustic positioning transponders 112 may also be used selectively on various portions of the cable to determine the positions of the cable/sensors during deployment and post deployment. The acoustic positioning transponders 112 may transmit on request an acoustic signal to the marine vessel for indicating the positioning of seismic nodes 110 on sea floor 104. In an embodiment, weights 114 may be coupled to deployment line 108 and be arranged to keep the seismic nodes 110 in a specific position relative to sea floor 104 at various points, such as during start, stop, and snaking of deployment line 108.

FIG. 1B is a close-up view illustrating one embodiment of a system 100 for marine deployment of seismic nodes 110. In an embodiment, the deployment line 108 may be a metal cable (steel, galvanized steel, or stainless steel). Alternatively, the deployment line 108 may include chain linkage, rope (polymer), wire, or any other suitable material for tethering to the marine vessel 106 and deploying one or more seismic nodes 110. In an embodiment, the deployment line 108 and the seismic nodes 110 may be stored on the marine vessel 106. For example, the deployment line may be stored on a spool or reel or winch. The seismic nodes 110 may be stored in one or more storage containers. One of ordinary skill may recognize alternative methods for storing and deploying the deployment line 108 and the seismic nodes 110.

In one embodiment, the deployment line 108 and seismic nodes 110 are stored on marine vessel 106 and deployed from a back deck of the vessel 106, although other deployment locations from the vessel can be used. As is well known in the art, a deployment line 108, such as a rope or cable, with a weight attached to its free end is dropped from the back deck of the vessel. The seismic nodes 110 are preferably directly attached in-line to the deployment line 108 at a regular, variable, or selectable interval (such as 25 meters) while the deployment line 108 is lowered through the water column and draped linearly or at varied spacing onto the seabed. During recovery each seismic node 110 may be clipped off the deployment line 108 as it reaches deck level of the vessel 106. Preferably, nodes 110 are attached directly onto the deployment line 108 in an automated process using node attachment or coupling machines on board the deck of the marine vessel 106 at one or more workstations or containers. Likewise, a node detaching or decoupling machine is configured to detach or otherwise disengage the seismic nodes 110 from the deployment line 108, and in some instances may use a detachment tool for such detaching. Alternatively, seismic nodes 110 can be attached via manual or semi-automatic methods. The seismic nodes 110 can be attached to the deployment line 108 in a variety of configurations, which allows for free rotation with self-righting capability of the seismic node 110 about the deployment line 108 and allows for minimal axial movement on deployment line 108 (relative to the acoustic wave length). For example, the deployment line 108 can be attached to the top, side, or center of seismic node 110 via a variety of configurations.

Once the deployment line 108 and the seismic nodes 110 are deployed on the sea floor 104, a seismic survey can be performed. One or more marine vessels 106 may contain a seismic energy source (not shown) and transmit acoustic signals to the sea floor 104 for data acquisition by the seismic nodes 110. Embodiments of the system 100 may be deployed in both coastal and offshore waters in various depths of water. For example, the system may be deployed in a few meters of water or in up to several thousand meters of water. In some configurations surface buoy 118 or pop up buoy 116 may be retrieved by marine vessel 106 when the seismic nodes 110 are to be retrieved from the sea floor 104. Thus, the system 110 may not require retrieval by means of a submersible or diver. Rather, pop up buoy 116 or surface buoy 118 may be picked up on the surface 102 and deployment line 108 may be retrieved along with seismic nodes 110.

### AUTONOMOUS SEISMIC NODE DESIGN

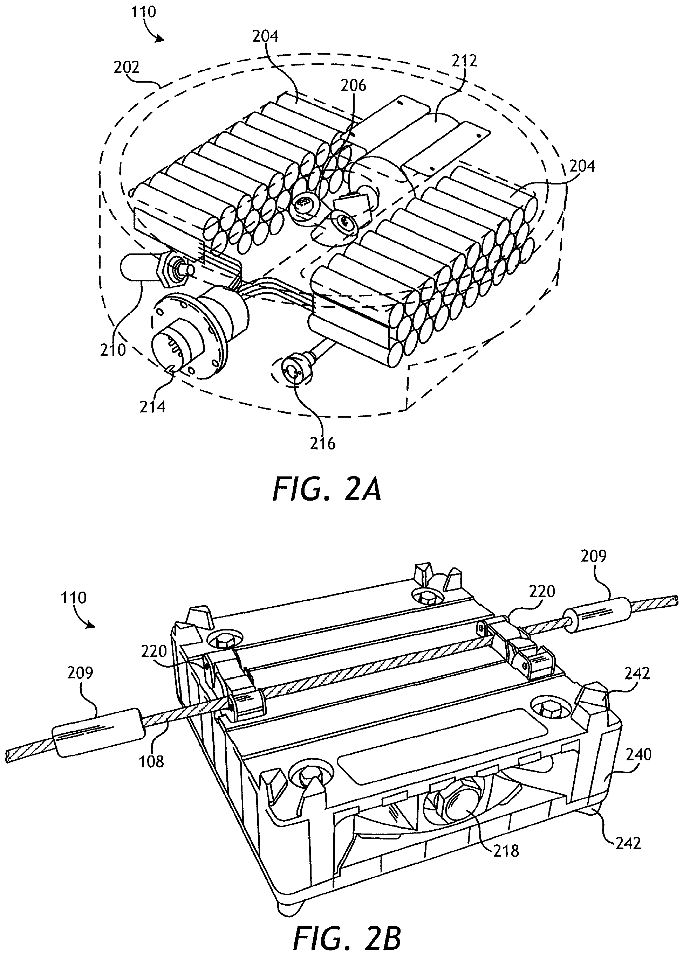

FIG. 2A illustrates a perspective view diagram of an autonomous ocean bottom seismic node 110. The seismic node 110 may include a body 202, such as a housing, frame, skeleton, or shell, which may be easily dissembled into various components. Additionally, the seismic node 110 may include one or more battery cells 204. Additionally, the seismic node may include a pressure release valve 216 configured to release unwanted pressure from the seismic node 110 at a pre-set level. The valve protects against fault conditions like water intrusion and outgassing from a battery package. Additionally, the seismic node may include an electrical connector 214 configured to allow external access to information stored by internal electrical components, data communication, and power transfer. In the prior art, the standard way to charge a node or transfer data to/from the node is to physically connect and/or manually insert a separate plug or wire into an external connector of the node, such as that shown as element 214 in FIG. 2A. During deployment in water the connector is covered by a pressure proof watertight cap 218 (shown in FIG. 2B). Data can be retrieved from the node during deployment or, more preferably, from the node while the node is in a container on board the marine vessel.

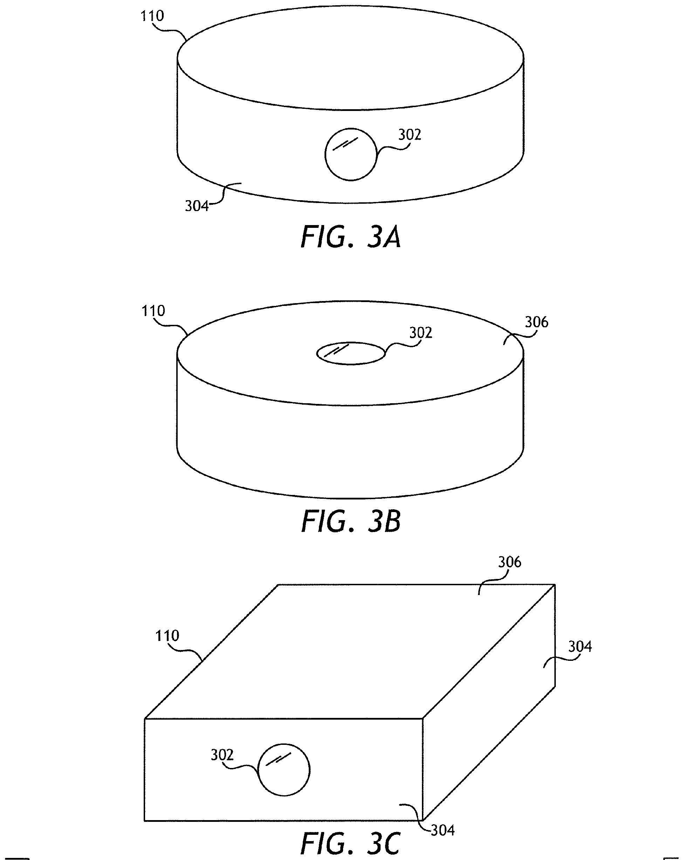

In one embodiment, the disclosed node does not have an external connector 214 and data is transferred to and from the node wirelessly, such as via electromagnetic or optical links. Thus, instead of external connector 214, the associated node circuitry may be connected to an electronic port/interface that is wireless (such as interfaces/ports 302 shown in FIGs. 3A-3C). In these embodiments, seismic node 110 may not have an external data/power connector 214, or in some embodiments connector 214 may function as a backup data/power connector (e.g., in case of a wireless transfer problem). In still other embodiments the wired electronics interface 214 is configured for only power transfer to the node.

In an embodiment, the internal electrical components may include one or more hydrophones 210, one or more (preferably three) geophones 206 or accelerometers, and a data recorder 212. In an embodiment, the data recorder 212 may be a digital autonomous recorder configured to store digital data generated by the sensors or data receivers, such as hydrophone 210 and the one or more geophones or accelerometers 206. One of ordinary skill will recognize that more or fewer components may be included in the seismic node 110. For example, additional electrical components, such as an Analog to Digital Converter (ADC) or network interface components, may be included. As another example, there are a variety of sensors that can be incorporated into the node including and not exclusively, inclinometers, rotation sensors, translation sensors, heading sensors, and magnetometers. Except for the hydrophone, these components are preferably contained within the node housing that is resistant to temperatures and pressures at the bottom of the ocean, as is well known in the art.

In an embodiment, power source 204 may be lithium-ion battery cells or rechargeable battery packs for an extended endurance (such as 90 days) on the seabed, but one of ordinary skill will recognize that a variety of alternative battery cell types or configurations may also be used. In one embodiment, the power source for each node is one or more sets of rechargeable batteries that can operate in a sealed environment, such as lithium, nickel, lead, and zinc based rechargeable batteries. Numerous rechargeable battery chemistries and types with varying energy densities may be used, such as lithium ion, lithium ion polymer, lithium ion iron phosphate, nickel metal hydride, nickel cadmium, gel lead acid, and zinc based batteries. Various rechargeable battery chemistries offer different operating parameters for safety, voltage, energy density, weight, and size. For example, voltage for a lithium ion battery may offer 3.6V with an energy density of 240 Wh/kg and 550 Wh/L. In various embodiments, the battery cell(s) may include a lithium-ion battery cell or a plurality of lithium-ion windings. In another embodiment, the battery cell may include a lithium-ion electrode stack. The shape and size of the battery cell(s) may be configured according to the power, weight, and size requirements of the seismic sensor node. One of ordinary skill will recognize a variety of battery cell types and configurations that may be suitable for use with the present embodiments. In some embodiments, the rechargeable battery pack includes a plurality of battery cells. These batteries may be charged directly by electrical interface/connector 214 and/or inductively charged, and in some embodiments a plurality of nodes may be simultaneously charged via a plurality of charging rods, as more fully described in U.S. Application 14/828,850, filed on August 18, 2015.

While the node in FIG. 2A is circular in shape, the node can be any variety of geometric configurations, including square, rectangular, hexagonal, octagonal, cylindrical, and spherical, among other designs, and may or may not be symmetrical about its central axis. In one embodiment, the node consists of a watertight, sealed case or pressure housing that contains all of the node's internal components. In another embodiment, the pressurizing node housing is partially and/or substantially surrounded by a non-pressurized node housing that provides the exterior shape, dimensions, and boundaries of the node. In one embodiment, the node is square or substantially square shaped so as to be substantially a quadrilateral, as shown in FIG. 2B. One of skill in the art will recognize that such a node is not a two-dimensional object, but includes a height, and in one embodiment may be considered a box, cube, elongated cube, or cuboid. While the node may be geometrically symmetrical about its central axis, symmetry is not a requirement. Further, the individual components of the node may not be symmetrical, but the combination of the various components (such as the pressurized housing and the non-pressurized housing) provide an overall mass and buoyancy symmetry to the node. In one embodiment, the node is approximately 350 mm x 350 mm wide/deep with a height of approximately 150 mm. In one embodiment, the body 202 of the node has a height of approximately 100 mm and other coupling features, such as node locks 220 or protrusions 242, may provide an additional 20-50 mm or more height to the node.

In another embodiment, as shown in FIG. 2B, the node's pressure housing maybe coupled to and/or substantially surrounded by an external non-pressurized node housing 240. Various portions of non-pressurized node housing 240 may be open and expose the pressurized node housing as needed, such as for hydrophone 210, node locks 220, and data/power transfer connection 214 (shown with a fitted pressure cap 218 in FIG. 2B). In one embodiment, the upper and lower portions of the housing include a plurality of gripping teeth or protrusions 242 for engaging the seabed and for general storage and handling needs. Non-pressurized node housing 240 provides many functions, such as protecting the node from shocks and rough treatment, coupling the node to the seabed for better readings (such as low distortion and/or high fidelity readings) and stability on the seabed, and assisting in the stackability, storing, alignment, and handling of the nodes. Each node housing may be made of a durable material such as rubber, plastic, carbon fiber, or metal, and in one embodiment may be made of polyurethane or polyethylene. In still other embodiments, the seismic node 110 may include a protective shell or bumper configured to protect the body.

In one embodiment, seismic node 110 comprises one or more direct attachment mechanisms and/or node locks 220 that may be configured to directly attach seismic node 110 to deployment line 108. This may be referred to as direct or in-line node coupling. In one embodiment, attachment mechanism 220 comprises a locking mechanism to help secure or retain deployment line 108 to seismic node 110. A plurality of direct attachment mechanisms may be located on any surfaces of node 110 or node housing 240. In one embodiment, a plurality of node locks 220 is positioned substantially in the center and/or middle of a surface of a node or node housing. The node locks may attach directly to the pressure housing and extend through the node housing 240. In this embodiment, a deployment line, when coupled to the plurality of node locks, is substantially coupled to the seismic node on its center axis. In some embodiments, the node locks may be offset or partially offset from the center axis of the node, which may aid the self-righting, balance, and/or handling of the node during deployment and retrieval. The node locks 220 are configured to attach, couple, and/or engage a portion of the deployment line to the node. Thus, a plurality of node locks 220 operates to couple a plurality of portions of the deployment line to the node. The node locks are configured to keep the deployment line fastened to the node during a seismic survey, such as during deployment from a vessel until the node reaches the seabed, during recording of seismic data while on the seabed, and during retrieval of the node from the seabed to a recovery vessel. The disclosed attachment mechanism 220 may be moved from an open and/or unlocked position to a closed and/or locked position via autonomous, semi-autonomous, or manual methods. In one embodiment, the components of node lock 220 are made of titanium, stainless steel, aluminum, marine bronze, and/or other substantially inert and non-corrosive materials, including polymer parts.

The disclosed node is an autonomous ocean bottom seismic node (OBN), and while the node in FIGs. 1A, 1B, 2A, and 2B is shown configured to be connected to a rope/cable for deployment and retrieval purposes, the OBN may be deployed and/or placed on the sea floor via any number of methods, such as by ROV, AUV, or other mechanisms. In one embodiment, as shown in FIGs. 1A and 1B, the OBN may be coupled to a cable/rope and deployed from the back deck of a marine vessel, such that a plurality of autonomous nodes may be coupled to the seabed and deployed and retrieved from the seabed by deploying and retrieving the cable. In still other embodiments, an OBN may be part of and/or coupled to an autonomous underwater vehicle (AUV), such that the AUV is steered from a marine vessel or other subsea location to the intended seabed destination for the survey and data recording, as described in U.S. Patent No. 9,090,319.

Once the survey is complete, the AUVs can either be recovered and/or steered back to the marine vessel for data downloading of the nodes and seismic data. The invention described herein is not limited to the method of placing and/or recovering OBNs from the seabed.

### WIRELESS DATA TRANSFER

FIGs. 3A-C illustrate embodiments of a seismic node configured for wireless data transfer. One of ordinary skill in the art would realize that other components, such as those mentioned above in reference to FIGs. 2A and 2B, would be part of the seismic node 110. In the embodiment of FIG. 3A, a port 302 is configured for wireless data communication. In one embodiment, the port 302 may be a window configured to allow optical signals to be passed between optical communication equipment on the vessel 106 (or another piece of equipment or location) and an optical transceiver in the node 110. In one such embodiment, the window may be made of sapphire, which may be mechanically robust and durable, and be of a substantially square or circular shape. In other embodiments, the window may be glass, translucent polymer, or the like. In the embodiment of FIG. 3A, the port 302 is located on a side surface 304 of the node 110. In the embodiment of FIG. 3B, the port 302 may be located on an end surface 306, such as the top or bottom, of the node 110. In the embodiment of FIG. 3C, the node 110 may have a rectangular cross-section, and the port 302 may be located on a side surface 304 of the node 110. The port 302 can be flush with or recessed within the node and/or node housing. In some embodiments, such as electromagnetic transmission of data, the wireless port may be located entirely within the node housing. One of ordinary skill will recognize various embodiments of node geometries and the placement of port 302 which may be suitable for use with the present embodiments.

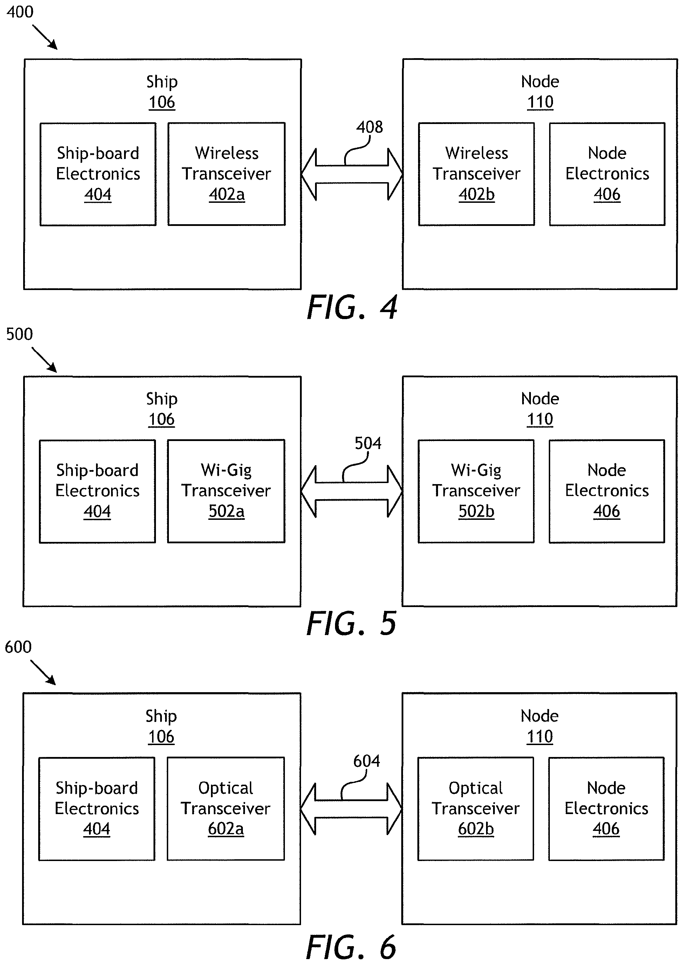

FIG. 4 illustrates one embodiment of a system 400 for wireless data transfer on an ocean bottom seismic node 110. In an embodiment, system 400 includes vessel 106 and node 110 and acts as a high data rate bi-directional wireless link from an ocean bottom node to enable the fast transfer of the recorded/stored data when the node returns to a surface vessel. The vessel or ship 106 may include ship-board electronics 404 and wireless transceiver 402a configured to communicate wirelessly with a wireless transceiver 402b on node 110. The node 110 may further include node electronics 406, such as electronic components described with relation to FIGs. 2A and 2B. The wireless transceiver 402a on ship 106 may be configured to establish a wireless data link 408 with wireless transceiver 402b on node 110. In one embodiment, node 110 comprises an on board memory storage unit, such as 64 Gbytes or 128 Gbytes, and is configured to transfer data from the node to the transceiver 402a at a rate of 1 Gbit/s, such that the total data transfer takes less than 20 minutes per node.

While the system described in FIG. 4 shows a wireless connection between a wireless transceiver on the vessel and a wireless transceiver on the node, in other embodiments the vessel transceiver can wirelessly link to a plurality of nodes at one or more times. Likewise, a plurality of wireless transceivers on a vessel can link to a plurality of wireless transceivers on a plurality of nodes simultaneously. Further, while the embodiment of FIG. 4 illustrates a ship-based wireless transceiver, other marine locations and equipment (such as an AUV, ROV, cage, and unmanned surface vessel) can wirelessly transfer data to the nodes. Still further, the invention is not necessarily limited to marine environments and can apply to land-based autonomous seismic sensors as well, in case this application falls under the scope of the claims.

FIG. 5 illustrates another embodiment of a system 500 for wireless data transfer on an ocean bottom seismic node. In the embodiment of FIG. 5, the wireless transceiver maybe a Wi-Gig transceiver 502a configured to establish a Gigabit wireless data link 504 with Wi-Gig transceiver 502b on node 110. An example of a Wi-Gig transceiver is a transceiver configured to operate according to a Wireless Gigabit Alliance (Wi-Gig) protocol as defined by industry standards, such as IEEE^{®} 802.11ad. In one such embodiment, Wi-Gig transceivers 502a-b may be configured to operate at a frequency of 60 GHz. A Gigabit data transfer rate may be useful for achieving rapid data transfer to and from the node. One of ordinary skill will recognize additional or alternative wireless data transfer protocols or configurations which may be suitable for use according to the present embodiments, such as lower data rate wireless data transfer (e.g., IEEE 802.11x WiFi).

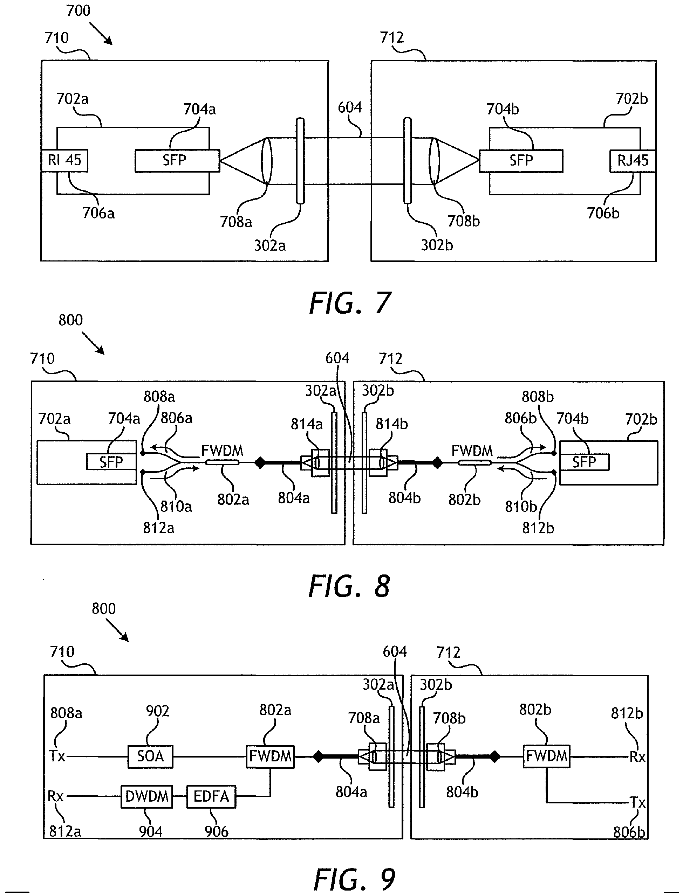

FIG. 6 illustrates another embodiment of a system 600 for wireless data transfer on an ocean bottom seismic node. In the embodiment of FIG. 6, the wireless transceiver may be an optical transceiver 602a, which is configured to establish an optical data link 604 with optical transceiver 602b of node 110. Examples of optical transceivers 602a-b are described below with reference to FIGs. 7-12. One of ordinary skill will recognize a variety of optical data transfer configurations and protocols which may be used to provide wireless data transfer between seismic node 110 and ship 106 or other electronic system.

### FORMATION OF FREE-SPACE COMMUNICATION BEAM

FIGs. 7-8 illustrate various embodiments of systems for forming a free-space wireless communication beam. The embodiments are primarily directed to optical communication systems, but one of ordinary skill will recognize that similar embodiments may be used with other wireless data communication technologies, such as Radio Frequency (RF) data communications, etc.

FIG. 7 illustrates one embodiment of a system 700 for optical wireless data transfer. In an embodiment, a symmetrical optical data link 604 is established between node 110 and ship 106, and preferably between ship-based wireless station 710 and node-based wireless station 712. In such an embodiment, ship-based wireless station 710 may include a media converter device and optics for transferring data over optical data link 604. In one embodiment, media converter 702a may include Small Form-factor Pluggable (SFP) transceiver 704a configured to handle optical data communications and wired data link 706a for communicating data received from node 110 to ship-board electronics 404 (not shown). An SFP is a pluggable commercially available optical transceiver, which typically includes a laser diode transmitter and a laser sensing receiver integrated into a single package, which is easily pluggable into an SFP port on a communication card. In one embodiment, the wired data link may include an RJ45 connection that provides wired data communication to external communications components, such as data switches, routers, servers, data storage devices, etc. Additionally, system 700 may include one or more optical devices for enhancing the free-space optical data link 604, such as optical lens 708a. Lens 708a may focus the optical beam generated by SFP 704a. Components of the ship's optical data link may be enclosed in a housing, and port or window 302a may allow for transmission of optical data link 604.

Similarly, one or more components of node-based wireless station 712 may be located within the housing 202 of node 110. In one embodiment, the components of node-based wireless station 712 complement and/or are the equivalent to the similar components found in ship-based wireless station 710. The optical communication system of the node 110 may include optical window or port 302b, such as a sapphire window, which may be configured to allow external optical communication with optical communication components in the node 110. Node 110 may also include lens 708b or other optical enhancement components. Additionally, the node may include a media converter 702b with an SFP transceiver 704b and a wired data link 706b (such as an RJ45 connector) configured for communication of data with node electronics (not shown).

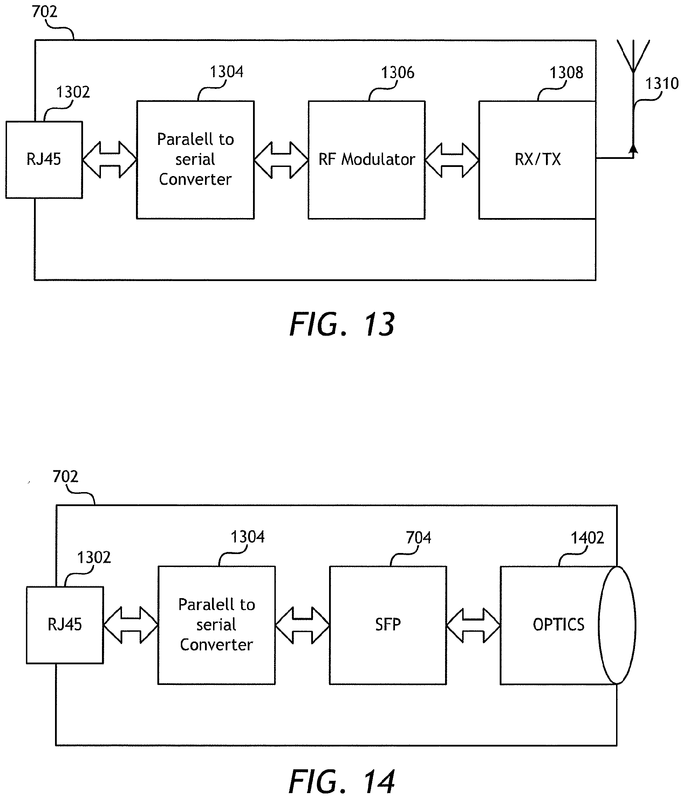

SFPs are available over a wide range of data rates, up to 10 Gbps, and are compatible with common communication protocols including gigabit Ethernet and SONET/SDH. They can also be integrated with IEEE 1588v2 synchronization as discussed below with reference to FIGs. 13-15. In one embodiment, a 1 Gb Ethernet data link in combination with a 1.25Gbps SFP may be used to achieve suitable performance. One advantage to using an SFP for the wireless data link is that the overall cost of the link may be reduced because an SFP is typically a Commercial Off the Shelf (COTS) product, which can be integrated into a variety of systems and operates according to known industry standards. Nonetheless, one of ordinary skill will recognize that the SFP may be replaced with a custom optics system or various Radio Frequency (RF) data communication alternatives.

FIG. 8 illustrates another embodiment of a system 800 for optical wireless data transfer. In this embodiment, lens 708a from FIG. 7 may be replaced with Large Core Fibers (LCF) 804a for forming the free-space beam of optical data link 604. In an embodiment, optical data link 604 is established between node 110 and ship 106, and preferably between ship-based wireless station 710 and node-based wireless station 712. In an embodiment, ship-based wireless station 710 includes media converter 702a, SFP transceiver 704a, and window 302a, and is configured to interface with node-based wireless system 712. SFP transceiver 704a mounted in media converter 702a may transmit the data in the optical domain at 1.25 Gbps. SFP 704a has a transmitter (Tx) port 812a and receiver (Rx) port 808a along transmit fiber 810a and receiver fiber 806a, respectively. The two ports may be combined onto a single fiber via a Frequency Division Wavelength Multiplexer (FWDM) 802a that combines and separates different wavelengths. In one embodiment, a bi-directional data link may be provided by choosing an SFP 704a with different wavelengths for each direction of communication. The different wavelengths can then be separated and combined with suitable FWDM filter 802a. In an embodiment, SFP 704a at wavelengths of 1310nm and 1550nm may be used. In an embodiment, the wavelength of SFP 704a relates to its transmitter wavelength, whereas its receiver may be broadband and detect light within the detector's InGaAs gain spectrum (1200 - 1600nm). One of ordinary skill will recognize the corresponding structures in node-based wireless station 712 may include corresponding and/or equivalent optical components as to the ship-based wireless station 710 *(e.g.,* elements 802b-812b).

In an embodiment, the SFP may be aligned with the LCF 804a for forming the free-space beam. In an embodiment, the LCF 804a may have a core diameter of 1.5mm. The large core increases the alignment tolerance of the free-space link due to the larger collection area, because the larger the core diameter the larger the alignment tolerance. The LCF 804a is connected to a beam collimator 814a, which may then launch and receive free-space beam 604. The beam collimator is configured to direct photons in the free-space beam along a linear path. In one embodiment, sapphire may be chosen for sight window 302a, due to its hardness and scratch resistance. On node 110, sapphire window 302b may be 5mm thick or more, and mounted in a high-pressure feed-through in order to sustain 300 Bar and other environmental issues, whereas on the ship window 302a can be much thinner and mounted generically. The thickness of window 302a has negligible effect on the link loss. Other windows may include glass and polymer.

To maximize the optical power budget of the system 800, long-reach SFPs may be used with high launch power (5dBm) and high receiver sensitivity (-31dBm, BER 1E-12 @ 1.25Gbps). In such an embodiment, the large power budget tolerates a link loss up to 36 dB. Preferably, the loss of the optical components in the optical link are small so that as much of the power budget can be allocated to losses in the free-space beam, in order to allow for misalignment, water absorption and obstruction from dirt and grime. Due to the large power budget afforded by the long-reach SFPs, error-free (or limited errors) transmission can be achieved.

Internal losses (such as those due to misalignment or water adsorption) within system 800 may reduce the wireless data link performance. Losses can occur at various stages of system 800, particularly at the junction with LCFs 804a-b. In certain embodiments, system 800 of FIG. 8 may be enhanced to either reduce losses or to compensate for losses by a variety of modifications. For example, a smaller core LCF 804a-b may reduce losses due to step-down/step-up interfaces. In another embodiment, a tapered fiber may be used for LCFs 804a-b. Tapering is achieved by heating a section of fiber (such as 1500um fiber) and carefully drawing the fiber until the desired smaller core size is obtained. In this way, a single strand of fiber is needed between the collection optics and the SFP.

### SIGNAL TO NOISE RATIO (SNR) ENHANCEMENT

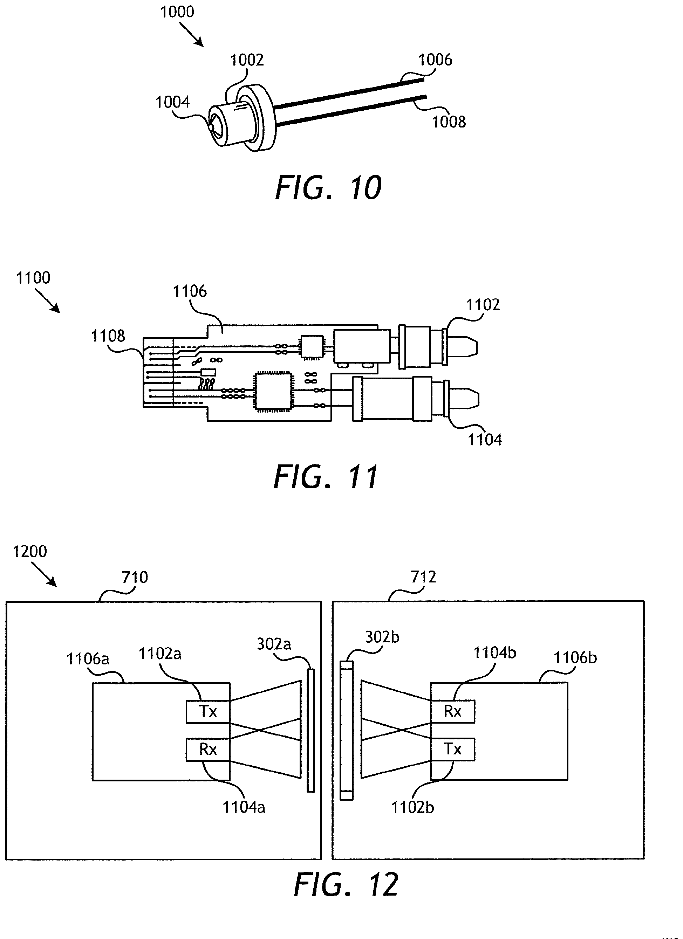

In an embodiment described below with reference to FIG. 9, amplifiers may be used to compensate for losses and to boost the signal to noise ratio in the system 900. In another embodiment, described below with reference to FIGs. 10-12, a Lambertian optical source and detector may be used for the optical transceiver. One of ordinary skill may recognize additional or alternative embodiments to compensate for losses and boost signal to noise ratio, including data coding schemes, passive gain enhancers, beam steering, or the like.

FIG. 9 illustrates an embodiment of system 900 for optical wireless data transfer with optical amplification. In an embodiment, the optical power budget of system 900 can be increased by introducing amplification. Optical amplifiers for optical data link, or RF amplifiers for RF data links may be used to boost or enhance data signals with respect to ambient noise to compensate for system losses, system noise, etc. In an embodiment, amplifiers 902, 906 can deliver approximately 15dB gain in each direction, which readily increases the angular and lateral tolerances at least ±8 degrees and ±3mm respectively between ship-based wireless station 710 and node-based wireless station 712. Within these ranges, it also provides margin to accommodate losses from water absorption and obstruction from dirt and grime. By placing amplifiers only within the ship based wireless station, the optical design of the node consists only of passive, fiber-optic components, providing flexibility in the placement of the SFP and media converters within the node. In an embodiment, amplifiers may be included in the ship-board side of system 900, but omitted from the nodes 110. In an alternative embodiment, the node may also include amplifiers. Semiconductor optical amplifiers (SOA) 902 and Erbium-doped Fiber Amplifiers (EDFA) 906 are two potential options, due to their small size, low power consumption, and low cost.

SOAs 902 maybe InGaAsP/InP semiconductor amplifiers that are fiber-pigtailed in 14-pin butterfly packages. They may be single mode devices and provide up to 30dB gain. High-power SOAs 902 that can deliver up to +17dBm output power typically have lower gain on the order of 11-12dB. SOAs 902 can also be optimized for various different wavelength regions, including 1310nm, 1490nm and 1550nm. EDFAs 906, on the other hand, are typically constrained to a wavelength range between 1528 - 1563nm. EDFAs are commonly used amplifiers in the telecommunications industry, and come in a variety of sizes and optical output powers, depending on the application. An EDFA 906 may include of a length of Erbium-doped optical fiber (typically up to 20m in length) that is coupled to a high-energy pump laser, typically at 980nm. Due to its all-fiber design, an EDFA can be configured with single mode or multimode fiber. Considering the 1310nm and 1550nm wavelengths in optical design, SOA 902 may amplify the 1310nm transmitter 808a branch, as it is outside of the EDFA gain region, while the EDFA 906 may amplify the 1550nm branch. Further, because SOAs 902 are single-mode, it may be placed at transmitter 808a because it is compatible with the single mode output of long-reach SFPs 704a-b. At receiver side 812a, the fiber from FWDM 802a may be multimode. Accordingly, receiver side 812a may include an EDFA 906. The type of optical fiber in the link is denoted by its thickness. As can be seen, in addition to the SOA 902 and EDFA 906 on the ship-side of the link, Dense Wavelength Division Multiplexing (DWDM) 904 and notch filters may be used at the output of the amplifiers to remove excess optical noise.

Rather than use fiber-based transceivers, which leverage off of telecommunications components, the wireless link can be designed using bare laser diodes and photodiodes that utilize Optical Wireless (OW) technology, while also using the same low-cost lasers and photodiodes found in SFPs 704a-b. Whereas the devices are packaged in Transmit Optical Sub-Assemblies (TOSA) and Receive Optical Sub-Assemblies (ROSA) form factors in SFPs (for fiber coupling), they are also readily available in Transmit Optics (TO) cans, directly exposing the exit facets, which would be suitable for OW communication. Examples of these form factors are shown in FIG. 10. The same Printed Circuit Boards (PCBs) used in an SFP can also be utilized, ensuring a compact solution, as shown in FIG. 11.

FIG. 10 illustrates one embodiment of a Lambertian optical signaling device 1000. A Lambertian optical signaling device 1000 typically includes diffuser 1004, which causes dispersion of the optical signal that can be characterized according to Lambert's cosine law, which correlates radiant intensity with the cosine of the angle between the observer's line of sight and a surface normal to the emitter. The optical source is typically an LED or laser diode 1002, which is passed through diffuser 1004 in order to achieve a defined, dispersed profile. Diffusers 1004 are available over a range of divergence angles. An advantage of dispersing the optical power is that high-power transmitters can be used while still maintaining eye-safe conditions. The receiver collects light from as wide an angle as possible. In an embodiment, the diffuser may include a ball lens in front of the detector. Additionally, large-area focusing lenses and/or concentrators can be used to further enhance the collection efficiency. Additionally, Lambertian optical signaling device 1000 may include interface pins 1006, 1008 for electrically interfacing with system components.

FIG. 11 illustrates one embodiment of Lambertian optical transceiver 1100. In an embodiment, Lambertian transceiver 1100 may include a transmitter 1102 and a receiver 1104 coupled to a Printed Circuit Board (PCB) 1106 having components for interfacing media converter 702a-b via interface pins 1108.

As shown in FIG. 12, a substantial reduction in system complexity may be realized with use of Lambertian optical transceivers 1100. In the system of FIG. 12, ship-based wireless station 710 comprises Lambertian transceiver PCB 1106a and node-based wireless station 712 comprises Lambertian transceiver PCB 1106b, with each PCB 1106a-b having an integrated Lambertian transmitter 1102 and receiver 1104. Each Lambertian transceiver 1100 may establish a data link directly through windows 302a-b, without the use of further optical components in some embodiments. In certain embodiments, amplifiers 902, 906 maybe eliminated. Additionally, certain optical components, such as lenses 708a-b and LCF 804a-b, may be eliminated. For example, the Lambertian system can eliminate need for additional lenses 708a-b, LCF 804a-b, amplifiers 902, 906, etc. by providing a wide angle beam and a wide angle receiver with diffusers 1004 in Lambertian transmitter 1102 and Lambertian receiver 1104, respectively.

### SIGNAL SYNCHRONIZATION

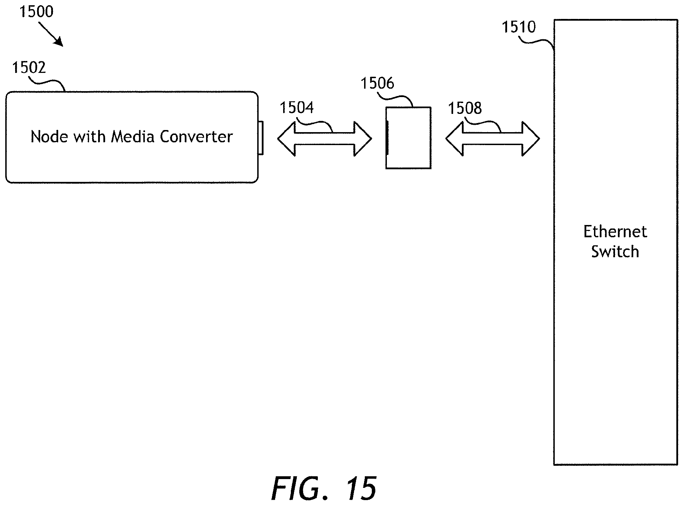

In addition to improvement of SNR as discussed in FIGs. 9-12, improved data rates and Bit Error Rates (BER) may be achieved through signal synchronization technologies. For example, the systems described below in FIGs. 13-15 may use clock and data signal synchronization to minimize BER in the wireless data transfer system. As discussed in FIG. 15, the signal synchronization may be extended throughout the communication system, and even to ship-board switching and routing devices.

For example, as illustrated in FIG. 13, media converter 702, which may be used in FIGs. 7-9, may include RJ45 connector 1302 for interfacing external components and parallel-to-serial converter 1304 configured for enhanced data synchronization and for converting the wireless data signals into data signals that are formatted for external system consumption, such as Internet Protocol (IP) data packets, or the like. In an embodiment, parallel-to-serial converter 1304 may be configured according to an industry standard synchronization protocol, such as IEEE^{®} 1588. IEEE^{®} 1588 is an industry standard for Precision Time Protocol (PTP). The PTP protocol is used to synchronize clocks throughout a computer network. On a Local Area Network (LAN), the protocol can achieve clock accuracy in the sub-microsecond range, making it suitable for measurement and control systems. IEEE 1588 generally operates in a hierarchical master-slave architecture for clock distribution, and can dramatically improve data link reliability and BER.

In the embodiment of FIG. 13, the system 1300 may be an RF wireless data link, and the media converter 702 may include an RF modulator/demodulator 1306 and one or more RF transmitter/receiver components 1308, such as filters. Additionally, media converter 702 may be coupled to RF antenna 1310. In a particular, the embodiment of FIG. 13 may be configured according to a Wi-Gig standard. One of ordinary skill will recognize that the IEEE 1588 system may be incorporated with the media converters 702a-b of each of the systems described above in FIGS. 7-9 and 12.

FIG. 14 illustrates a similar system, but where the data link is an optical link as opposed to an RF data link. The embodiment of FIG. 14 may include a similar wired data connector, such as RJ45 connector 1302. In an embodiment, the media converter 702 of FIG. 14 may also include an IEEE 1588 parallel to serial converter 1304 for converting optical data signals into serial data signals for transmission to a broader ship-based network as illustrated in FIG. 15. The embodiment of FIG. 14 may further include SFP 704 and associated optics 1402.

FIG. 15 illustrates system 1500 for enhanced synchronization of clock signals between one or more nodes 1502, ship-board transceiver 1506, and Ethernet switch 1510. In an embodiment, system 1500 includes node 1502 with an IEEE^{®} 1588 media converter. Node 1502 may communicate with ship-board transceiver 1506 over wireless data link 1504. Ship-board transceiver 1506 may then communicate with an IEEE 1588 Ethernet switch 1510 over wired data connection 1508. In such an embodiment, clock and data signals communicated between node 1502, ship-board transceiver 1506, and switch 1510 maybe synchronized in accordance with the IEEE 1588 protocol.

### NODE HANDLING AND COMMUNICATION SYSTEMS

As mentioned above, to perform a marine seismic survey that utilizes autonomous seismic nodes, those nodes must be deployed and retrieved from a vessel, typically a surface vessel. In one embodiment, one or more node storage and service systems is coupled to one or more deployment systems. Together they may be generically or collectively referred to as a node handling system, which may use one or more CSC approved ISO containers, as described in more detail in U.S. Patent Application No. 14/821,492, filed on August 7, 2015. The node storage and service system is configured to handle, store, and service the nodes before and after the deployment and retrieval operations performed by a node deployment system. Such a node storage and service system is described in more detail in U.S. Patent Application No. 14/711,262, filed on May 13, 2015. The node deployment system is configured to attach and detach a plurality of nodes to a deployment cable or rope and for the deployment and retrieval of the cable into the water. Details on a node installation system and an overboard unit system of a node deployment system are described in more detail in U.S. Patent Application Nos. 14/820,285 and 14/820,306, both filed on August 6, 2015. In one embodiment, wireless data transfer from a node is performed within the node storage and service system, and in some embodiments such wireless data transfer is performed within a CSC approved ISO container of the node storage and service system.

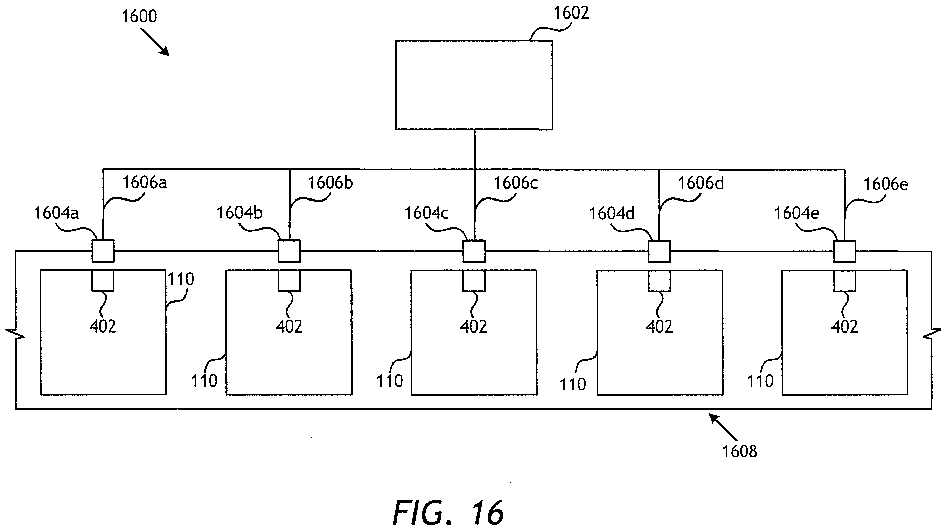

As mentioned above, the embodiments of FIGs 4-15 may be used in a node deployment/retrieval system. As the nodes 110 are deployed and/or retrieved, the ship-board communication systems of any of FIGs. 4-15 may communicate with nodes 110 to send and receive configuration information, node information/data, seismic data, and the like. The embodiments of FIGs. 16-19 illustrate just a few of the possible node handling and data communication systems that may be used in accordance with the present embodiments.

FIG. 16 illustrates one embodiment of a system 1600 for simultaneous wireless data transfer with a plurality of seismic nodes 110. In an embodiment, system 1600 includes a central data processor 1602, such as a switch, router, or server. A plurality of wireless transceivers 1604a-e may be coupled to central data processor 1602 via one or more data links 1606a-e. In one embodiment, each wireless transceiver 1604a-e is a vessel-based wireless station such as that described in FIGs. 4-15. Each wireless transceiver 1604a-e wirelessly communicates data with a wireless transceiver 402 on node 110, either through electromagnetic or optical links. In one embodiment, the distance between wireless transceiver 1604 and wireless transceiver 402 is approximately 2-5 cm. In one embodiment, wireless transceiver 402 is a node-based wireless station such as that described in FIGs. 7-9 and FIGs. 12-15. Wireless transceivers 1604a-e communicate wirelessly with nodes 110 simultaneously. The wireless communication can take place in numerous locations, such as when the nodes are on a conveyor belt or other transfer device, in temporary or permanent storage, or in a holding area, workstation, or CSC approved ISO container. In one embodiment, the plurality of wireless transceivers 1604 is moved adjacent to the plurality of wireless transceivers 402 on the nodes. In another embodiment, the nodes are moved adjacent (either individually or together) the plurality of wireless transceivers 1604. In one embodiment, the vessel-based wireless stations can be located in a downloading container on the back deck of a marine vessel, which comprises both the plurality of wireless transceivers 1604 and the plurality of nodes 110. In some embodiments, this container can also be utilized for storage and/or charging of the nodes. In one embodiment, each downloading/charging/storage container is a standard 20-foot CSC approved ISO container and holds between approximately 500 to 1000 nodes. In one embodiment, the container includes two separate downloading racks of eleven rows (or levels) with each storing eleven nodes per row. Thus, in this embodiment, approximately 242 nodes can be downloaded at a time in the downloading container. In another embodiment, the container includes two separate downloading racks of three rows (or levels) with each storing ten nodes per row. Thus, in this embodiment, approximately 60 nodes can be downloaded at a time in the downloading container. In still another embodiment, the container may include five separate downloading racks of fifteen rows (or levels) with each storing thirteen nodes per row. Thus, in this embodiment, approximately 975 nodes can be downloaded at a time in the downloading container. Various sizes and configurations and more or less racks and rows can be utilized to achieve a higher or lower node capacity.

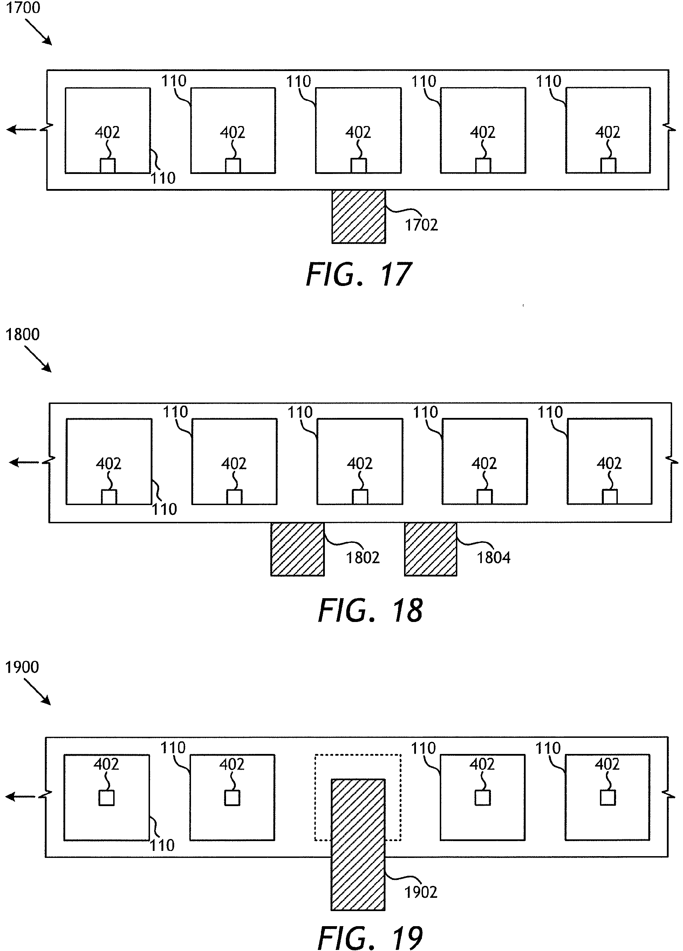

FIG. 17 illustrates one embodiment of system 1700 for queued data transfer with a plurality of seismic nodes 110, which does not form part of the present invention. In the depicted embodiment, single vessel-based wireless transceiver 1702 may be positioned to receive data from nodes 110 as they are conveyed along a conveyor system (such as conveyor system 1608 in FIG. 16) towards transceiver 1702. In such an embodiment, the conveyor system may pause briefly to allow data transfer from each node. In one embodiment, conveyor system 1608 may pause for a predetermined time period. In another embodiment, conveyor system 1608 may be coupled to data transceiver 1702 and pause only long enough to complete the data transfer. In one embodiment, transceiver 1702 is configured to move, orient, and/or position itself adjacent to at least a portion of node data transceiver 402. This is advantageous when one or more of the nodes may not be aligned sufficiently for effective data transfer. One of ordinary skill may recognize various alternative embodiments, for example, where nodes 110 are conveyed at a speed that is calculated to allow complete data transfer as the node passes wireless transceiver 1702.

In the embodiment of FIG. 18, multiple vessel-based wireless transceivers 1802-1804 may be used instead of just one vessel based transceiver as shown in FIG. 17. In this embodiment, plurality of nodes 110a is moved adjacent to the plurality of vessel-based wireless transceivers 1802, 1804 for simultaneous data transfer. Once the data transfer is complete, a new plurality of nodes 110b is moved adjacent to the plurality of vessel-based wireless transceivers for another process of simultaneous data transfer. In further embodiments, three, four, or more transceivers may be incorporated into the system to speed up the data transfer process.

FIG. 19 illustrates another embodiment of system 1900 for wireless data transfer with a plurality of seismic nodes 110. In the depicted embodiment, the vessel-based wireless data transceiver 1902 may be at least partially positioned over the nodes 110 as they are conveyed along the conveyor system 1608. Such an embodiment may be suitable for systems 1900 in which the data transceiver 402 is configured to establish an optical data link from a window 302 in an end (e.g., upper or top) surface 306 of node 110, as illustrated in FIG. 3B. In one embodiment, transceiver 1902 is configured to move, orient, and/or position itself over at least a portion of the node and/or node data transceiver 402. One of ordinary skill will recognize various alternative arrangements, and advantages associated with each arrangement, depending upon the configuration of no des 110 and the node handling system and node deployment system.

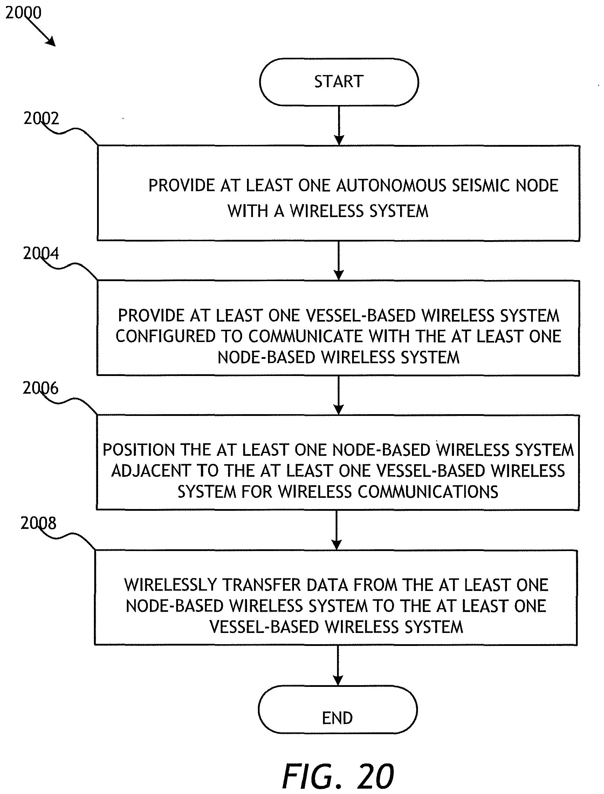

FIG. 20 illustrates one embodiment of method 2000 , not forming part of the present invention, for wireless data transfer with an autonomous seismic node 110. In an embodiment, the method includes providing at least one autonomous seismic node 110 with a wireless system, as shown at block 2002. At block 2004, the method includes providing at least one vessel based wireless system configured to communicate with the at least one node based wireless system. At block 2006, the method includes positioning the at least one node based wireless system adjacent to the at least one vessel based wireless system for wireless communication. In an alternative embodiment, the node based wireless system is not necessarily positioned adjacent to the at least one vessel based wireless system, but is positioned within communication range of the at least one vessel based wireless system. At block 2008, the method includes wirelessly transferring data from the at least one node based wireless system to the at least one vessel based wireless system.

In an embodiment of method 2000, the positioning step takes place on board a marine vessel in a CSC approved ISO container or other node storage system. In an embodiment, the node-based wireless system comprises a first wireless data communication interface for communication with an external data handling system, such as the vessel-based wireless system. In one embodiment, the vessel-based wireless system comprises a second wireless data communication interface for communication with the at least one node-based wireless system on the autonomous seismic node. In one embodiment, the method includes wirelessly transferring data over an optical link. In another embodiment, the method includes wirelessly transferring data over an electromagnetic link.

Many other variations in the configurations of a node and the wireless systems on the node and/or vessel are within the scope of the invention. For example, the node may be circular or rectangular shaped, the node may be positioned on the seabed or within a body of water and coupled to an ROV or AUV. As another example, the data may be transferred from the node under water by an ROV or AUV or other subsea device. It is emphasized that the foregoing embodiments are only examples of the very many different structural and material configurations that are possible within the scope of the present invention.

Although the invention(s) is/are described herein with reference to specific embodiments, various modifications and changes can be made without departing from the scope of the present invention(s), as presently set forth in the claims below. Accordingly, the specification and figures are to be regarded in an illustrative rather than a restrictive sense, and all such modifications are intended to be included within the scope of the present invention(s). Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are openended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A wireless transmission system (400, 500, 600) for transferring data wirelessly from autonomous seismic nodes (110), comprising
a plurality of autonomous seismic nodes (110), wherein each autonomous seismic node comprises:
one or more power sources (204);
one or more seismic sensors (206, 210);
one or more recording devices (212);
a node based wireless system, wherein the node based wireless system comprises a node electronics interface (406) in data communication with one or more of the power sources, seismic sensors, and recording devices of the respective autonomous seismic node (110), and a first wireless data communication interface (402b), the wireless transmission system (400, 500, 600) further comprising:
a plurality of vessel based wireless systems, each vessel based wireless system comprising a second wireless data communication interface configured to interface with the node based wireless system on each of the plurality of autonomous seismic nodes while on a back deck of a surface vessel,
wherein the node based wireless system on each of the plurality of autonomous seismic nodes and the plurality of vessel based wireless systems are configured to perform simultaneous data transfer,
wherein data exchanged between the node based wireless system on each of the plurality of autonomous seismic nodes and the plurality of vessel based wireless systems comprises at least seismic data recorded by the one or more seismic sensors,
wherein the plurality of vessel based wireless systems is configured for wireless data transfer with the node based wireless system on each of the plurality of autonomous seismic nodes while those autonomous seismic nodes are located on a conveyor system (1608) on the back deck of the surface vessel.

2. The system of claim 1, wherein the node based wireless system comprises an optical window (302) on one surface of the autonomous seismic node configured for optical data transmission.

3. The system of claim 1, wherein the wireless transmission system is configured to wirelessly transfer data over an optical link (604).

4. The system of claim 1, wherein the wireless transmission system is configured to wirelessly transfer data over an electromagnetic link (504).

5. The system of claim 1, wherein the plurality of vessel based wireless systems is configured to position itself proximate to the node based wireless system of each of the plurality of autonomous seismic nodes.

6. The system of claim 1, wherein the conveyor system is configured to move the plurality of autonomous seismic nodes adjacent the plurality of vessel based wireless systems.

7. The system of claim 1, wherein the conveyor system is configured to pause during wireless data transfer.

8. A method of transferring data wirelessly, comprising
providing (2002) a plurality of autonomous seismic nodes (110), each with a node-based wireless system (402b),
providing (2004) a plurality of vessel-based wireless systems (402a) configured to communicate with the node-based wireless system of each of the plurality of autonomous seismic nodes, respectively;
positioning (2006) the plurality of autonomous seismic nodes proximate to the plurality of vessel-based wireless systems for wireless communications while on a back deck of a surface vessel based on movement of the plurality of autonomous seismic nodes on a conveyor system (1608); and
simultaneously wirelessly transferring seismic data (2008) from the plurality of autonomous seismic nodes to the plurality of vessel-based wireless systems while the plurality of autonomous seismic nodes are located on the conveyor system located on the back deck of the surface vessel.

9. The method of claim 8, wherein wirelessly transferring data is performed over an optical link (604).

10. The method of claim 8, wherein wirelessly transferring data is performed over an electromagnetic link (504).

11. The method of claim 8, further comprising pausing the conveyor system during the wireless transfer step.

12. The method of claim 8, further comprising pausing movement of at least one of the plurality of autonomous seismic nodes while on the conveyor system for a predetermined time period to allow wireless transfer of the recorded seismic data.

13. The method of claim 8, further comprising positioning the plurality of vessel-based wireless systems to be aligned with the at least one node based wireless system for wireless data transfer.

## Patentansprüche

1. Drahtloses Übertragungssystem (400, 500, 600) zum drahtlosen Transferieren von Daten von autonomen seismischen Knoten (110), umfassend
eine Mehrzahl von autonomen seismischen Knoten (110), wobei jeder autonome seismische Knoten Folgendes umfasst:
eine oder mehrere Leistungsquellen (204);
einen oder mehrere seismische Sensoren (206, 210);
eine oder mehrere Aufzeichnungsvorrichtungen (212);
ein knotenbasiertes drahtloses System, wobei das knotenbasierte drahtlose System eine Knotenelektronikschnittstelle (406) in Datenkommunikation mit einer oder mehreren der Leistungsquellen, seismischen Sensoren und Aufzeichnungsvorrichtungen des jeweiligen autonomen seismischen Knotens (110) und eine erste drahtlose Datenkommunikationsschnittstelle (402b) umfasst, wobei das drahtlose Übertragungssystem (400, 500, 600) ferner Folgendes umfasst:
eine Mehrzahl von schiffsbasierten drahtlosen Systemen, wobei jedes schiffsbasierte drahtlose System eine zweite drahtlose Datenkommunikationsschnittstelle umfasst, die dazu ausgelegt ist, sich mit dem knotenbasierten drahtlosen System auf jedem der Mehrzahl von autonomen seismischen Knoten zu koppeln, während sie sich auf einem Achterdeck eines Überwasserschiffes befinden,
wobei das knotenbasierte drahtlose System auf jedem der Mehrzahl von autonomen seismischen Knoten und die Mehrzahl von schiffsbasierten drahtlosen Systemen dazu ausgelegt sind, einen gleichzeitigen Datentransfer durchzuführen,
wobei Daten, die zwischen dem knotenbasierten drahtlosen System auf jedem der Mehrzahl von autonomen seismischen Knoten und der Mehrzahl von schiffsbasierten drahtlosen Systemen ausgetauscht werden, mindestens seismische Daten umfassen, die durch den einen oder die mehreren seismischen Sensoren aufgezeichnet wurden,
wobei die Mehrzahl von schiffsbasierten drahtlosen Systemen für einen drahtlosen Datentransfer mit dem knotenbasierten drahtlosen System auf jedem der Mehrzahl von autonomen seismischen Knoten ausgelegt ist, während sich diese autonomen seismischen Knoten auf einem Fördersystem (1608) auf dem Achterdeck des Überwasserschiffes befinden.

2. System nach Anspruch 1, wobei das knotenbasierte drahtlose System ein optisches Fenster (302) auf einer Fläche des autonomen seismischen Knotens umfasst, das für eine optische Datenübertragung ausgelegt ist.

3. System nach Anspruch 1, wobei das drahtlose Übertragungssystem dazu ausgelegt ist, Daten über eine optische Verbindung (604) drahtlos zu transferieren.

4. System nach Anspruch 1, wobei das drahtlose Übertragungssystem dazu ausgelegt ist, Daten über eine elektromagnetische Verbindung (504) drahtlos zu transferieren.

5. System nach Anspruch 1, wobei die Mehrzahl von schiffsbasierten drahtlosen Systemen dazu ausgelegt ist, sich proximal zu dem knotenbasierten drahtlosen System jedes der Mehrzahl von autonomen seismischen Knoten zu positionieren.

6. System nach Anspruch 1, wobei das Fördersystem dazu ausgelegt ist, die Mehrzahl von autonomen seismischen Knoten angrenzend an die Mehrzahl von schiffsbasierten drahtlosen Systemen zu bewegen.

7. System nach Anspruch 1, wobei das Fördersystem dazu ausgelegt ist, während eines drahtlosen Datentransfers anzuhalten.

8. Verfahren zum drahtlosen Transferieren von Daten, umfassend
Bereitstellen (2002) einer Mehrzahl von autonomen seismischen Knoten (110), jeweils mit einem knotenbasierten drahtlosen System (402b),
Bereitstellen (2004) einer Mehrzahl von schiffsbasierten drahtlosen Systemen (402a), die dazu ausgelegt sind, jeweils mit dem knotenbasierten drahtlosen System jedes der Mehrzahl von autonomen seismischen Knoten zu kommunizieren;
Positionieren (2006) der Mehrzahl von autonomen seismischen Knoten proximal zu der Mehrzahl von schiffsbasierten drahtlosen Systemen für drahtlose Kommunikationen, während sie sich auf einem Achterdeck eines Überwasserschiffes befinden, basierend auf einer Bewegung der Mehrzahl von autonomen seismischen Knoten auf einem Fördersystem (1608); und
gleichzeitiges drahtloses Transferieren seismischer Daten (2008) von der Mehrzahl von autonomen seismischen Knoten zu der Mehrzahl von schiffsbasierten drahtlosen Systemen, während sich die Mehrzahl von autonomen seismischen Knoten auf dem Fördersystem auf dem Achterdeck des Überwasserschiffes befindet.

9. Verfahren nach Anspruch 8, wobei ein drahtloses Transferieren von Daten über eine optische Verbindung (604) durchgeführt wird.

10. Verfahren nach Anspruch 8, wobei ein drahtloses Transferieren von Daten über eine elektromagnetische Verbindung (504) durchgeführt wird.

11. Verfahren nach Anspruch 8, ferner umfassend Anhalten des Fördersystems während des drahtlosen Transferschritts.

12. Verfahren nach Anspruch 8, ferner umfassend Anhalten einer Bewegung mindestens eines der Mehrzahl von autonomen seismischen Knoten, während er sich auf dem Fördersystem befindet, für eine vorbestimmte Zeitdauer, um einen drahtlosen Transfer der aufgezeichneten seismischen Daten zu ermöglichen.

13. Verfahren nach Anspruch 8, ferner umfassend Positionieren der Mehrzahl von schiffsbasierten drahtlosen Systemen derart, dass sie mit dem mindestens einen knotenbasierten drahtlosen System für einen drahtlosen Datentransfer ausgerichtet sind.

## Revendications

1. Système (400, 500, 600) de transmission sans fil destiné à transférer des données sans fil à partir de noeuds sismiques autonomes (110), comportant une pluralité de noeuds sismiques autonomes (110), chaque noeud sismique autonome comportant :
une ou plusieurs sources (204) d'alimentation ;
un ou plusieurs capteurs sismiques (206, 210) ;
un ou plusieurs dispositifs (212) d'enregistrement ;
un système sans fil basé sur le noeud, le système sans fil basé sur le noeud comportant une interface (406) d'électronique de noeud en communication de données avec un ou plusieurs éléments parmi les sources d'alimentation, les capteurs sismiques et les dispositifs d'enregistrement du noeud sismique autonome (110) considéré, et une première interface (402b) de communication de données sans fil, le système (400, 500, 600) de transmission sans fil comportant en outre :
une pluralité de systèmes sans fil basés sur un navire, chaque système sans fil basé sur le navire comportant une seconde interface de communication de données sans fil configurée pour s'interfacer avec le système sans fil basé sur le noeud sur chaque noeud de la pluralité de noeuds sismiques autonomes tandis qu'elle se trouve sur un pont arrière d'un navire de surface,
le système sans fil basé sur le noeud sur chaque noeud de la pluralité de noeuds sismiques autonomes et la pluralité de systèmes sans fil basés sur le navire étant configurés pour effectuer un transfert simultané de données,
des données échangées entre le système sans fil basé sur le noeud sur chaque noeud de la pluralité de noeuds sismiques autonomes et la pluralité de systèmes sans fil basés sur le navire comportant au moins des données sismiques enregistrées par le ou les capteurs sismiques,
la pluralité de systèmes sans fil basés sur le navire étant configurée pour un transfert de données sans fil avec le système sans fil basé sur le noeud sur chaque noeud de la pluralité de noeuds sismiques autonomes tandis que ces noeuds sismiques autonomes sont situés sur un système (1608) de convoyeur sur le pont arrière du navire de surface.

2. Système selon la revendication 1, le système sans fil basé sur le noeud comportant une fenêtre optique (302) sur une surface du noeud sismique autonome, configurée pour une transmission optique de données.

3. Système selon la revendication 1, le système de transmission sans fil étant configuré pour transférer des données sans fil sur une liaison optique (604).

4. Système selon la revendication 1, le système de transmission sans fil étant configuré pour transférer des données sans fil sur une liaison électromagnétique (504).

5. Système selon la revendication 1, la pluralité de systèmes sans fil basés sur le navire étant configurée pour se positionner à proximité du système sans fil basé sur le noeud de chaque noeud de la pluralité de noeuds sismiques autonomes.

6. Système selon la revendication 1, le système de convoyeur étant configuré pour déplacer la pluralité de noeuds sismiques autonomes au voisinage de la pluralité de systèmes sans fil basés sur le navire.

7. Système selon la revendication 1, le système de convoyeur étant configuré pour s'interrompre pendant le transfert de données sans fil.

8. Procédé de transfert de données sans fil, comportant les étapes consistant à
mettre en place (2002) une pluralité de noeuds sismiques autonomes (110), chacun étant doté d'un système (402b) sans fil basé sur le noeud,
mettre en place (2004) une pluralité de systèmes (402a) sans fil basés sur un navire configurés pour communiquer avec le système sans fil basé sur le noeud de chaque noeud de la pluralité de noeuds sismiques autonomes, respectivement ;
positionner (2006) la pluralité de noeuds sismiques autonomes à proximité de la pluralité de systèmes sans fil basés sur le navire en vue de communications sans fil tandis qu'ils se trouvent sur un pont arrière d'un navire de surface sur la base d'un mouvement de la pluralité de noeuds sismiques autonomes sur un système (1608) de convoyeur ; et
transférer simultanément sans fil des données sismiques (2008) de la pluralité de noeuds sismiques autonomes à la pluralité de systèmes sans fil basés sur le navire tandis que la pluralité de noeuds sismiques autonomes est située sur le système de convoyeur situé sur le pont arrière du navire de surface.

9. Procédé selon la revendication 8, le transfert de données sans fil étant effectué sur une liaison optique (604) .

10. Procédé selon la revendication 8, le transfert de données sans fil étant effectué sur une liaison électromagnétique (504).

11. Procédé selon la revendication 8, comportant en outre l'interruption du système de convoyeur pendant l'étape de transfert sans fil.

12. Procédé selon la revendication 8, comportant en outre l'interruption du mouvement d'au moins un noeud de la pluralité de noeuds sismiques autonomes tandis qu'il se trouve sur le système de convoyeur pendant un laps de temps prédéterminé pour permettre un transfert sans fil des données sismiques enregistrées.

13. Procédé selon la revendication 8, comportant en outre le positionnement de la pluralité de systèmes sans fil basés sur le navire pour qu'ils soient alignés avec le ou les systèmes sans fil basés sur les noeuds en vue du transfert de données sans fil.
